Europäisches Patentamt

European Patent Office

Office européen des brevets

(11) Numéro de publication : **0 332 505 B1**

## (12) FASCICULE DE BREVET EUROPEEN

(45) Date de publication du fascicule du brevet :
**04.11.92 Bulletin 92/45**

(21) Numéro de dépôt : **89400572.7**

(22) Date de dépôt : **01.03.89**

(51) Int. Cl.⁵ : **A47J 37/04, H05B 6/80**

---

**(54) Four à micro-ondes.**

---

(30) Priorité : **07.03.88 FR 8802875**

(43) Date de publication de la demande :
**13.09.89 Bulletin 89/37**

(45) Mention de la délivrance du brevet :
**04.11.92 Bulletin 92/45**

(84) Etats contractants désignés :
**AT BE CH DE ES FR GB GR IT LI LU NL SE**

(56) Documents cités :
**EP-A- 0 251 947**
**DE-A- 2 226 498**
**DE-A- 2 705 063**
**GB-A- 857 216**
**GB-A- 2 000 949**
**US-A- 3 199 438**
**US-A- 3 269 299**
**US-A- 4 286 133**
**US-A- 4 409 452**

(73) Titulaire : **Société SCHOLTES**
**Route de Luxembourg B.P. 48**
**F-57101 Thionville Cédex (FR)**

(72) Inventeur : **Scholtes, Pierre**
**24 route du crève-coeur**
**F-57100 Thionville (FR)**
Inventeur : **Hoffmann, Michel**
**Rue des Peupliers**
**F-57570 Cattenon (FR)**

(74) Mandataire : **Armengaud Ainé, Alain**
**Cabinet ARMENGAUD AINE 3 Avenue**
**Bugeaud**
**F-75116 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention est relative à un four à micro-ondes comportant un tourne-broche et une résistance de grill.

On connaît déjà dans la technique de nombreuses réalisations de fours à convection naturelle ou forcée, utilisant des résistances chauffantes réparties dans et autour de l'enceinte de ce four, parfois agencées pour fournir une distribution des calories avec une distribution dite à chaleur tournante, ces fours comprenant également dans la voûte de leur enceinte une résistance de grill délivrant, lorsqu'elle est sous tension, un rayonnement infra-rouge afin de permettre la cuisson en surface des aliments et leur donner un aspect doré, particulièrement apétissant. De même, on connaît les fours du genre en question où l'enceinte est associée à un mécanisme de tourne-broche qui permet de faire tourner sur elle-même une pièce de viande, de volaille ou autre, portée par la broche entraînée en rotation sur elle-même, de façon à obtenir une cuisson de la pièce qui soit sensiblement uniforme sur tous ses côtés.

On sait par ailleurs que sont apparus sur le marché depuis plusieurs années, des fours dits à micro-ondes, qui mettent en oeuvre un mode de chauffage différent, en utilisant un champ électrique à haute fréquence, établi dans l'enceinte du four à partir d'un générateur approprié et qui, dans tout élément ou matériau présentant une constante diélectrique suffisante, disposé dans cette enceinte, crée des pertes par relaxation diélectrique (rotation des molécules polaires), qui occasionnent un dégagement calorifique intense, se produisant ainsi in situ. Les ondes qui, dans cette application, présentent en conformité avec les règlements en vigueur une fréquence égale à 2,45 GHz, sont concentrées, après réflexions multiples sur les parois métalliques de l'enceinte du four, au sein de la pièce à cuire, ce qui exige en particulier, pour éviter des déperditions de chaleur, d'éliminer autant que nécessaire au voisinage ou autour de celle-ci des parties métalliques, en particulier des plats ou récipients de ce genre, qui, en conduisant l'énergie, diminuent le rendement de la fonction micro-ondes. S'il est dès lors possible, avec ce mode de chauffage, de réchauffer à coeur et rapidement un produit alimentaire, l'inconvénient est que ce dernier conserve son aspect initial de produit cru, qui est généralement peu apétissant, surtout s'il s'agit d'une pièce de viande ou de volaille.

C'est pourquoi de nombreux fours à micro-ondes associent aux moyens permettant de créer le champ électrique dans l'enceinte, une résistance de grill, propre à fournir un rayonnement infra-rouge pour superposer à l'effet de cuisson aux micro-ondes celui d'un grill à rôtir. Mais là encore subsiste l'inconvénient déjà mentionné, le rayonnement infra-rouge ne pouvant dorer la pièce à cuire que d'un seul côté ; une cuisson complète exige donc d'ouvrir le four, puis de retourner la pièce selon chacun des côtés à griller. Un tel système est donc peu pratique et en fait dénué véritablement d'intérêt pour ce type de cuisson.

La mise en place dans un four à micro-ondes d'une tourne-broche conventionnel en travers de l'enceinte, comme dans un four de cuisson ordinaire, fait surgir d'autres difficultés, qui découlent principalement de la formation d'arcs électriques particulièrement gênants, voire rédhibitoires, dans une telle application. Ces arcs électriques peuvent en effet occasionner par leur répétition, des détériorations rapides des parties métalliques entre lesquelles ils s'établissent. En outre, ils provoquent dans les parties métalliques du four et du tourne-broche des fuites de l'énergie hyperfréquence au détriment de la concentration des calories à l'intérieur des pièces à cuire. Enfin, les décharges et les éclairs qui accompagnent la formation de ces arcs, sont visibles et bruyants; ils sont donc totalement à exclure dans la pratique d'un appareil ménager.

En particulier, dans sa forme de réalisation la plus classique, un tourne-broche consiste en une tige métallique allongée, rigide, épointée à une extrémité pour faciliter la traversée de la pièce à rôtir, cette tige étant engagée dans un embout ou analogue, entraîné en rotation par un petit moteur électrique monté à l'extérieur de l'enceinte du four. La broche peut reposer sur un berceau d'appui, également métallique, comportant des parties ou rebords surélevés sur lesquels porte la broche, le berceau reposant lui-même sur le fond de l'enceinte ou sur des saillies en relief, formant tasseaux, ménagées à cet effet dans les parois latérales de celle-ci.

C'est la raison pour laquelle, par suite des différences de potentiels importantes créées par le champ électrique entre les diverses parties métalliques dans l'enceinte du four, le tourne-broche risque d'être le siège des arcs électriques précités, tout spécialement entre la broche et son berceau de support, et également entre cette broche, jouant le rôle d'une antenne rayonnante et l'embout de l'axe d'entraînement du moteur. Il en résulte un endommagement rapide de ces pièces, en particulier du moteur, qui subit un échauffement exagéré. En outre, les pertes de micro-ondes qui se produisent par la broche et l'axe du moteur, peuvent conduire à la fuite d'un rayonnement inadmissible à l'extérieur du four, avec une densité du champ supérieure à 5mW/cm2 qui constitue la tolérance maximale prévue par les Normes Internationales.

On connaît par le US-A-4 409 552 une réalisation dans laquelle la broche s'étend transversalement dans le four, parallèlement à la paroi de fond et à la porte avant de celui-ci. Dans ces conditions, le moteur d'entraînement de la broche doit être disposé sur un des côtés du four, ce qui limite très sensiblement le volume utile ménagé à l'intérieur de la cavité de celui-ci, d'autant plus que, dans ce même brevet américain antérieur, les moyens de commande des fonctions du four et en particulier ceux qui fournissent l'énergie micro-ondes sont logés du côté opposé.

Par le brevet allemand DE-A-2 705 063, on connaît par ailleurs un système où la broche s'étend perpendiculairement à la paroi de fond du four et à la porte d'ouverture disposée parallèlement à cette paroi. Mais dans ce cas, si la broche pénètre dans un palier de support monté dans la paroi de fond, elle exige à l'opposé la mise en place d'une structure d'appui qui ne peut que gêner le libre accès dans le four pour intervenir sur l'aliment en cours de cuisson. D'autre part, selon ce brevet antérieur, la structure de support comporte pour recevoir l'extrémité de la broche, un véritable palier ce qui complique la réalisation de l'ensemble.

La présente invention a pour objet un tourne-broche pour four à micro-ondes équipé également d'une résistance de grill par infra-rouges qui pallie les inconvénients des solutions précitées, en permettant à la fois de monter le tourne-broche perpendiculairement à la paroi de fond du four et d'éviter la présence d'un palier à son extrémité opposée au voisinage de la porte du four, la liaison entre le tourne-broche et un embout monté sur l'axe du moteur d'entraînement étant indépendante de cette paroi de fond ce qui facilite la construction du four et permet de mieux tolérer les éventuels défauts d'alignement entre l'axe et le tourne broche. L'invention concerne également un four polyvalent, notamment à micro-ondes, équipé d'un tel tourne-broche.

A cet effet, le four à micro-ondes comportant un tourne-broche et une résistance de grill, muni d'une enceinte où un élément à cuire peut être soumis à l'effet d'un rayonnement à haute-fréquence et simultanément à un rayonnement infra-rouge issu d'une résistance de grill portée par la paroi interne de l'enceinte, le tourne-broche étant constitué d'une part d'une broche métallique allongée dont une extrémité, de préférence en forme de pointe, coopère avec un embout creux d'entraînement solidaire de l'axe d'un moteur électrique de commande de la rotation de cette broche, situé à l'extérieur d'une paroi de fond fermant l'enceinte, la broche s'étendant dans un plan perpendiculaire à cette paroi, et d'autre part d'un berceau de support de la broche par au moins un élément d'appui à l'opposé de l'embout, ce berceau étant logé dans l'enceinte du four, les surfaces de contact entre la broche et respectivement l'embout de l'axe du moteur et le berceau de support étant mutuellement isolées électriquement par une épaisseur appropriée d'un matériau isolant à faible constante diélectrique, se caractérise en ce que l'extrémité de la broche est supportée par l'embout par l'intermédiaire d'un manchon en matériau isolant, traversant librement la paroi de fond, et en ce que l'élément d'appui de la broche sur le berceau est constitué par une pièce également en matériau isolant, prévue sur un au moins de deux bords surélevés du berceau, la pièce étant formée d'un élément en forme générale de diabolo, comportant une gorge.

Selon le cas, le matériau isolant est réalisé avec une céramique, en "Bakelite" (marque déposée), en polytetrafluoroethylène "Teflon" (marque déposée), en verre, notamment du genre "Pyrex" (marque déposée), ou en tout autre matériau isolant présentant une constante diélectrique à 2,45 GHz comprise entre 2 et 5, sans que ces valeurs soient en elles-mêmes limitatives.

Dans un premier mode de réalisation du four considéré, le manchon est ouvert du côté recevant l'extrémité de la broche et est prolongé du côté opposé par un doigt s'engageant dans l'embout creux prévu en bout de l'axe du moteur.

Avantageusement, la section interne du manchon recevant la broche et la section externe de cette broche présentent des profils complémentaires, de manière à assurer la transmission à la broche, par l'intermédiaire du manchon, de l'effet d'entraînement en rotation reçu du moteur par l'embout. Notamment, les sections interne du manchon et externe de la broche, peuvent être, selon les variantes envisagées, carrées, rectangulaires, ou encore présenter un profil quelconque non parfaitement circulaire. En particulier, on peut prévoir dans la surface interne du manchon au moins une rainure axiale pour l'engagement d'une nervure en relief prévue dans l'extrémité de la broche.

De préférence également et selon une autre caractéristique de l'invention, le manchon en matériau isolant recevant l'extrémité de la broche traverse un piège quart d'onde, circulaire, disposé coaxialement au manchon et à l'embout autour de la broche, ce piège étant constitué de deux pièces métalliques de révolution présentant un profil un L, imbriquées l'une dans l'autre et inversées, ces pièces étant réunies de manière à serrer entre elles la paroi de l'enceinte au droit d'un passage traversé par la broche.

Dans un autre mode de réalisation du four, le manchon recevant l'extrémité de la broche se présente sous la forme d'un revêtement en matériau isolant, constituant une bague sertie ou frettée sur la broche et qui s'engage directement dans l'embout du moteur.

Quelle que soit la variante de réalisation adoptée pour assurer la liaison entre l'extrémité de la broche et l'embout d'entraînement, le tourne-broche selon l'invention comporte, au droit de l'appui de la broche sur le berceau de support, en particulier sur un au moins des deux rebords surélevés du berceau, une pièce d'appui en matériau isolant, de préférence identique au matériau du manchon ou de la bague coopérant avec l'embout, cette pièce évitant l'établissement d'arcs électriques directs entre les parties métalliques de la broche et du berceau.

Dans une variante d'exécution, la pièce d'appui de la broche au droit du berceau, est formée d'un élément en diabolo, comprenant une gorge centrale reposant sur un des rebords surélevés du berceau, ce rebord présentant également un profil en V pour réaliser le centrage de la broche sur le berceau longitudinalement et transversalement, sans empêcher sa libre rotation.

Dans une autre variante, la broche comporte deux éléments isolants en forme de diabolos, propres à reposer sur les deux rebords opposés du berceau, disposés parallèlement l'un à l'autre, pour le support de la broche si celle-ci est notamment mal positionnée dans l'embout.

Dans une autre variante encore, l'un au moins des rebords surélevés du berceau porte une pièce en matériau isolant, notamment en forme de diabolo, et sur laquelle s'appuie directement la broche.

Dans ce cas, la broche comporte avantageusement une rainure en creux pour la positionner sur le berceau, au droit de la ou des pièces isolantes.

De façon usuelle, la broche comporte utilement deux fourchettes propres à immobiliser sur celle-ci une pièce de viande ou autre aliment à rôtir, traversé par la broche, ces fourchettes munies de deux dents parallèles étant de préférence respectivement disposées dans deux plans perpendiculaires, pour éviter des arcs parasites entre leurs pointes. Avantageusement, chaque fourchette est enfilée et immobilisée sur la broche en position appropriée et présente à cet effet un trou de même profil que la section de la broche mais décalé de 90° d'une fourchette à l'autre ; la broche peut comporter également une partie vrillée sur elle-même à 90° pour disposer directement les deux fourchettes dans deux plans perpendiculaires.

D'autres caractéristiques et avantages d'un four à micro-ondes réalisé conformément à l'invention apparaîtront encore à travers la description qui suit de plusieurs exemples de réalisation, donnés ci-après à titre indicatif et non limitatif, en référence aux dessins annexés sur lesquels :

- La Figure 1 est une vue schématique en perspective d'un four à micro-ondes prévu pour recevoir un tourne-broche, agencé conformément à l'invention.
- La Figure 2 est une vue de dessus en coupe transversale du four de la Figure 1.
- La Figure 3 est une vue en coupe longitudinale à plus grande échelle, d'une première variante de réalisation d'un tourne-broche dans un four selon l'invention.
- Les Figures 4 et 5 sont des vues de détail à plus grande échelle des moyens assurant la liaison entre l'extrémité de la broche et l'embout prolongeant l'axe de son moteur d'entraînement.
- Les Figures 6 et 7 sont des vues en perspective de deux variantes de réalisation des moyens prévus dans le tourne-broche du four selon l'invention, pour isoler la broche vis-à-vis du berceau de support de celle-ci à l'intérieur du four.

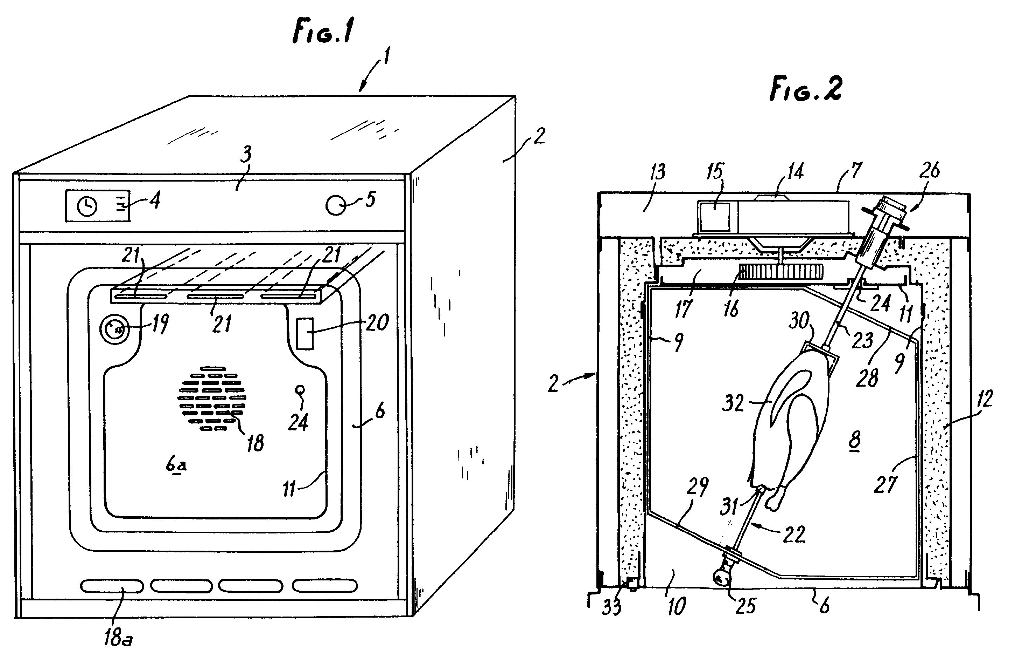

Le four 1 représenté sur les Figures 1 et 2 est un four à micro-ondes, d'un type en lui-même classique dans la technique. Il comporte notamment un boîtier ou coffret extérieur 2, muni d'un bandeau avant 3 sur lequel sont disposés des moyens de programmation 4 et de commande 5 de la marche du four, ces moyens étant en eux-mêmes indépendants des dispositions de la présente invention. Le four comporte sur l'avant du boîtier 2 une porte pivotante 6 munie ordinairement d'une vitre renforcée 6a qui comporte une grille perforée, soudée sur l'armature de la porte (non représentés), pour former écran vis-à-vis des micro-ondes, en évitant notamment que le champ électrique ne rayonne à l'extérieur à travers la vitre du four. Celui-ci comporte par ailleurs une paroi de fond 7 et, à l'intérieur du boîtier 2, une enceinte 8 dans laquelle sont mis en place les éléments à cuire à l'intérieur du four. Cette enceinte est délimitée par des parois latérales 9, une surface inférieure d'appui 10 et une paroi plane ou cloison arrière 11, parallèle au fond 7 du boîtier 2. L'enceinte 8 ainsi délimitée à l'intérieur du four est entourée extérieurement par une couche appropriée 12 d'un matériau isolant thermique, destiné de façon classique à éviter les déperditions de calories vers l'extérieur et, au contraire, à les concentrer à l'intérieur de l'enceinte 8 pour une cuisson plus efficace des aliments.

A l'arrière du four est prévu un logement 13 recevant notamment un moteur de commande 14, associé à une volute 15 et à une turbine 16, permettant de répartir dans l'enceinte 8 un courant d'air en circulation permanente pour améliorer la convection calorifique, la turbine 16 étant disposée dans une chambre 17 derrière la cloison 11.

Cette dernière comporte des passages 18 (Figure 1) pour l'introduction de l'air ainsi refoulé par la turbine à l'intérieur de l'enceinte 8. Enfin, sur la face avant du four, à travers le bas de la porte 6, ou sous cette dernière, sont prévus des passages d'évacuation 18a.

L'équipement du four se complète au moyen d'une lampe d'éclairage 19 montée sur le fond de l'enceinte 8, de préférence dans la cloison 11, cette dernière comportant par ailleurs l'orifice de sortie 20 d'un guide d'ondes, délivrant dans la cavité le champ à haute fréquence à partir d'un générateur (non représenté), disposé ordinairement à l'arrière du four, à l'intérieur du logement 13.

Afin de permettre, non seulement la cuisson des aliments dans l'enceinte 8 par les micro-ondes du champ électrique ainsi crée, mais également de rôtir superficiellement certains plats ou aliments, notamment des pièces de viande ou de volaille, le four considéré comporte, de façon déjà connue dans la technique, des résistances chauffantes 21 (Figure 1), montées dans la voûte supérieure de l'enceinte 8 et agencées pour pouvoir fournir, lorsque ces résistances sont mises sous tension, un rayonnement infrarouge approprié.

Conformément à l'invention, le four à micro-ondes ainsi équipé de ses résistances de grill 21 est aménagé pour comporter également un tourne-broche 22, permettant à la pièce de viande ou de volaille 32, portée par ce tourne-broche, d'être rôtie ou dorée sur tous ses côtés et non plus seulement sur la face de celle-ci qui est disposée en regard des résistances de grill.

A cet effet, le tourne-broche 22 comporte de façon usuelle une broche 23, se présentant sous la forme d'une tige métallique allongée, propre à traverser un passage 24 prévu dans la cloison de fond 11 de l'enceinte 8, en s'étendant perpendiculairement au plan de cette cloison. Cette tige comporte à une extrémité une poignée ou moyen de préhension analogue 25. A son extrémité opposée, généralement en forme de pointe afin de lui permettre de traverser la pièce à rôtir, la broche est prévue pour coopérer avec un moteur électrique d'entraînement 26. L'ensemble repose à l'intérieur de l'enceinte 8 sur un berceau de support métallique 27, comportant deux rebords surélevés, respectivement 28 et 29, parallèles l'un à l'autre et disposés, dans l'exemple de réalisation représenté, en opposition sur la diagonale de l'enceinte selon laquelle s'étend la broche 23 lorsque celle-ci est convenablement positionnée et en particulier engagée dans le passage 24 pour être entraînée par le moteur 26. Bien entendu, il va de soi que la position particulière de la broche 25 est en elle-même indifférente à l'invention et que dans d'autres variantes, elle pourrait être disposée différemment, du moment qu'elle peut être entièrement logée à l'intérieur de l'enceinte, la porte 6 du four étant nécessairement fermée en fonctionnement.

La broche 23 comporte de façon usuelle deux fourchettes coulissantes, respectivement 30 et 31, dont le détail de la réalisation et du montage sera donné plus loin, ces fourchettes permettant de maintenir serrée entre elles, la pièce à rôtir 32, une fois celle-ci mise en place sur la broche.

L'équipement du four se complète enfin au moyen d'au moins deux micro-rupteurs tels que 33, ne permettant la mise sous tension des différents appareils, en particulier du générateur de micro-ondes, qu'une fois la porte 6 convenablement fermée.

On conçoit aisément que, dans le mesure où la broche 23 est métallique, ce qui est en soi nécessaire pour lui conférer la rigidité indispensable pour percer et soutenir les pièces à cuire, l'établissement dans l'enceinte 8 du champ créant les micro-ondes nécessaires à la cuisson des aliments, va immédiatement provoquer, en particulier au droit des points d'appui de la broche sur les rebords 28 et 29 du berceau 27 d'une part, à la liaison entre la broche et le moteur 26 d'autre part, des arcs électriques, dont les effets particulièrement gênants et inacceptables en fonctionnement ont été déjà précisés.

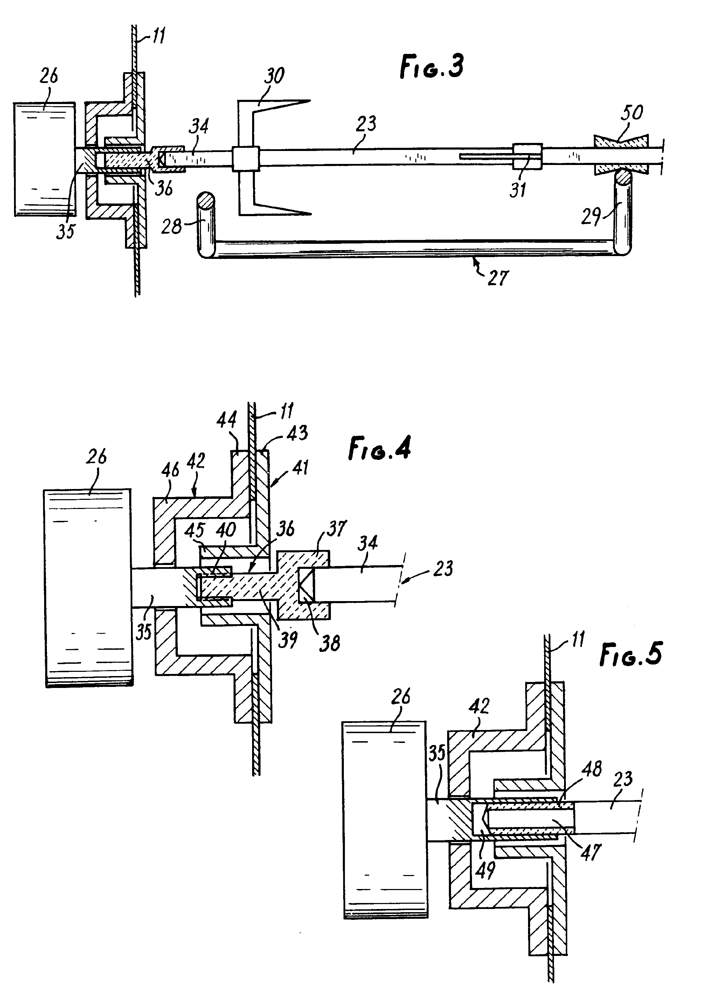

Pour pallier ces inconvénients et comme illustré sur les Figures 3 et 4, on prévoit, dans un premier mode de réalisation de l'invention, d'assurer la liaison entre l'extrémité en pointe 34 de la broche 23 et un embout creux 35 prolongeant l'axe d'entraînement du moteur 26, destiné à recevoir la broche, au moyen d'une pièce intermédiaire isolante 36, évitant un contact métallique direct entre la broche et l'embout, en particulier au voisinage du passage 24 prévu dans la cloison de fond 11. La pièce de liaison 36 est prévue pour traverser librement la cloison 11 en permettant ainsi d'ajuster les éventuels défauts d'alignement entre la broche 23 et l'axe du moteur 26 selon lequel est disposé l'embout 35.

Comme on le voit plus particulièrement sur la Figure 4, la pièce de liaison 36 se présente sous forme d'un manchon 37, présentant un logement interne creux 38 dans lequel s'engage l'extrémité 34 de la broche 23. Ce manchon 37 est prolongé à l'opposé du logement 38 par un doigt 39, propre à être solidarisé de l'embout 35, par exemple grâce à une partie filetée 40 prévue à l'extrémité de ce doigt et vissée dans une partie correspondante de l'embout.

La pièce 36 peut être réalisée en tout matériau diélectrique présentant des propriétés d'isolation électrique convenables, notamment présentant une constante diélectrique comprise entre 2 et 5 ! On peut ainsi utiliser des matières céramiques (de constante voisine de 2), mais aussi bien du Teflon (constante 2,1), de la Bakelite (constante 3,7), du verre Pyrex (constante 4,8)... Par ailleurs, il va de soi que la liaison entre l'axe 39 et l'embout 35 peut être réalisée différemment, par exemple au moyen d'un circlips, par collage, par sertissage ou par tout autre procédé approprié.

Afin d'assurer un entraînement sûr de la broche 23 par le moteur 26, notamment pour éviter que le manchon 37 ne tourne de façon relative par rapport à l'extrémité 34 de cette broche, cette dernière présente avantageusement une forme non circulaire, par exemple à la section carrée ou rectangulaire, le logement 38 du manchon comportant un profil correspondant. On pourrait également prévoir de réaliser le logement 38 avec une forme cylindrique, en ménageant cependant dans sa surface interne une rainure longitudinale, apte à recevoir une nervure en saillie prévue sur l'extrémité 34 de la broche, de façon à solidariser celle-ci avec le manchon et par suite avec l'embout 35 commandé en rotation par le moteur 26.

La broche 23 ainsi reliée à l'embout 35 traverse la cloison de fond 11 du four dans le passage 24 correspondant, à travers un dispositif permettant avantageusement de piéger les micro-ondes, en évitant que le rayonnement ne traverse également la cloison en direction du moteur 26, ce qui risquerait d'échauffer celui-ci, voire même de le détériorer gravement, en diminuant de toute manière le rendement calorifique du fait des pertes ainsi créées. A cet effet, on prévoit de monter autour de la pièce de liaison 36 un piège dit quart d'onde, comportant deux pièces métalliques 41 et 42, de révolution autour de l'axe de la broche et présentant des formes en L, imbriquées l'une dans l'autre, ces pièces 41 et 42 étant serrées par leurs prolongements respectifs 43 et 44 contre la paroi 11 et comportant des extensions 45 et 46 parallèles, séparées par une distance déterminée en fonction de la longueur d'onde du rayonnement à haute fréquence mis en oeuvre.

Dans une autre variante de réalisation, illustrée sur la Figure 5, la broche 23 comporte une extrémité 47 de plus faible dimension transversale, sur la surface extérieure de laquelle est sertie ou frettée une bague 48, en matériau diélectrique du genre d'un de ceux précédemment mentionnés. Cette bague assure l'isolement vis-à-vis de l'embout 35 dans le logement intérieur 49 duquel elle s'engage pour solidariser la broche et l'embout. Dans cette variante, le montage met également en jeu un piège quart d'onde, avec les pièces 41 et 42 déjà décrites dans la première variante.

Ces dispositions permettent dans l'un et l'autre cas d'assurer un isolement galvanique efficace entre la broche et l'embout d'entraînement du moteur. Toutefois, il est encore nécessaire, à l'extrémité opposée de la broche, d'assurer un isolement analogue entre celle-ci et la ou les surfaces d'appui de cette dernière sur le berceau de support 27, placé dans l'enceinte et en particulier sur les rebords 28 et 29 de celui-ci.

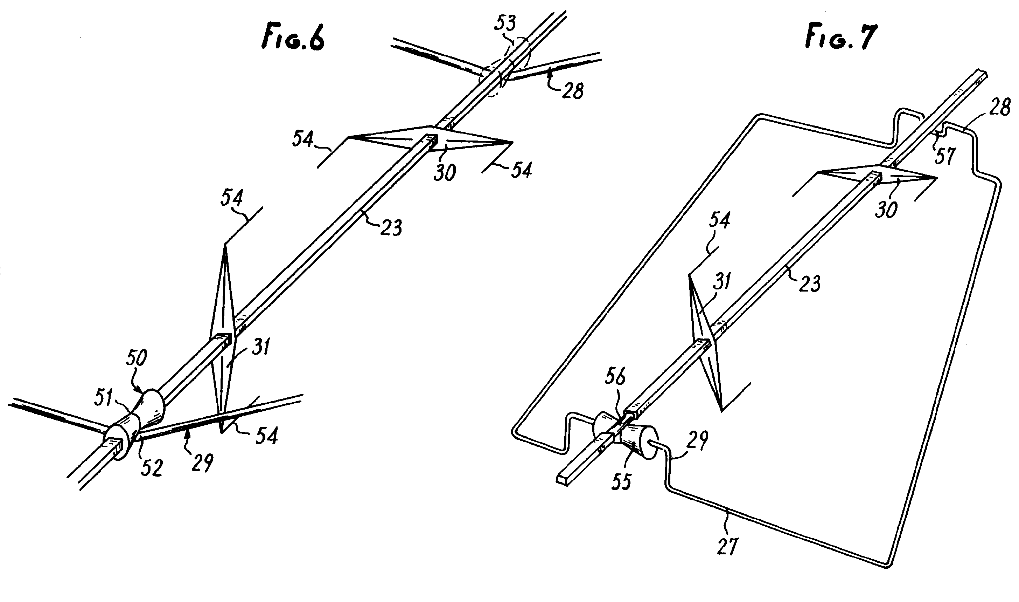

Dans ce but et comme illustré sur la Figure 6, on peut prévoir dans un premier mode de réalisation de disposer sur la broche 23 une pièce 50 en matériau diélectrique approprié, ayant de préférence la forme d'un diabolo et présentant de ce fait une gorge médiane 51, propre à venir reposer contre le fond 52 du rebord 29 conformé à cet effet avec un profil en V très ouvert, en assurant ainsi un positionnement précis de la broche immobilisée transversalement et longitudinalement sans empêcher sa rotation sur elle-même. La broche 23 peut également comporter, mais de façon non obligatoire, une seconde pièce d'isolement 53, analogue à la pièce 50, prévue au droit du second rebord 28, notamment pour éviter un contact direct entre la broche et le berceau. On remarquera néanmoins que cette seconde pièce 53 n'est pas indispensable, la porte 6 du four ne pouvant être fermée que si la broche 23 est convenablement engagée dans l'embout 35 du moteur, la position des pièces et en particulier le fait que le rebord 29 sont légèrement surélevés vis-à-vis du rebord 28 (Figure 3), rendant ce second appui inutile. En revanche, si pour une raison quelconque, la broche n'est pas convenablement mise en place, elle vient alors reposer sur les deux rebords 28 et 29 du berceau, tout en empêchant la fermeture de la porte et du micro-contact 33, et par suite la commande du fonctionnement du générateur de micro-ondes.

Sur la Figure 6, on voit également que la broche supporte, de façon usuelle, les deux fourchettes 30 et 31, celles-ci comportant chacune deux dents parallèles 54, pour embrocher face à face la pièce à cuire 32. Avantageusement, ces fourchettes sont pourvues d'un orifice adéquat, permettant leur coulissement sur la broche, avec également des moyens (non représentés) pour les immobiliser l'une par rapport à l'autre à distance convenable. Les trous de passage de la broche dans les fourchettes sont tels que leurs sections ne soit superposables qu'après une rotation de 90°, pour placer les deux fourchettes dans deux plans perpendiculaires, ceci afin d'éviter la formation éventuelle d'arcs électriques entre leurs pointes respectives. En variante, la broche peut avoir une section vrillée sur 90° pour réaliser de la même manière le décalage des fourchettes dans leurs plans respectifs.

Dans une autre variante illustrée sur la Figure 7, l'isolement électrique entre la broche 23 et les rebords 29, le cas échéant 28, du berceau 27, est obtenu en disposant non plus sur la broche elle-même mais sur ces rebords, une pièce isolante 55, comme précédemment en forme de diabolo. Dans ce cas cependant, on prévoit avantageusement sur la broche 23 une rainure 56 venant coiffer la pièce 55, pour immobiliser la broche en position vis-à-vis du berceau 27. En outre, on peut aménager le rebord opposé 28 pour qu'il présente une partie en creux 57, formant appui direct de la broche lorsque celle-ci n'est pas réunie à l'embout 35 du moteur, et en particulier lorsque le fonctionnement en micro-ondes n'est pas commandé.

On réalise ainsi un four à micro-ondes muni d'un tourne-broche spécialement adapté pour son montage à l'intérieur de ce four, équipé d'une résistance de grill à infra-rouges. Le tourne-broche ne diffère de ceux usuellement employés dans la technique que par la mise en place de moyens d'isolement qui évitent d'une part la formation d'arcs électriques préjudiciables, d'autre part des déperditions de l'énergie micro-ondes fournie qui peut, au contraire, être parfaitement concentrée sur l'aliment à cuire placé sur le tourne-broche. Les moyens d'isolement adoptés sont faciles à réaliser et à adapter sur la broche elle-même ou sur son berceau de support.

## Revendications

1 - Four à micro-ondes comportant un tourne-broche et une résistance de grill, muni d'une enceinte où un élément à cuire peut être soumis à l'effet d'un rayonnement à haute-fréquence et simultanément à un rayonnement infra-rouge issu de la résistance de grill portée par la paroi interne de l'enceinte, le tourne-broche étant constitué d'une part d'une broche métallique allongée dont une extrémité, de préférence en forme de pointe, coopère avec un embout creux d'entraînement solidaire de l'axe du moteur électrique de commande de la rotation de cette broche, situé à l'extérieur d'une paroi de fond fermant l'enceinte, la broche s'étendant dans un plan perpendiculaire à cette paroi, et d'autre part d'un berceau de support de la broche par au moins un élément d'appui à l'opposé de l'embout, ce berceau étant logé dans l'enceinte du four, les surfaces de contact entre la broche et respectivement l'embout de l'axe du moteur et le berceau de support étant mutuellement isolées électriquement par une épaisseur appropriée d'un matériau isolant à faible constante diélectrique, caractérisé en ce que l'extrémité (34) de la broche (23) est supportée par l'embout (35) par l'intermédiaire d'un manchon (37-48) en matériau isolant, et en ce que l'élément d'appui de la broche sur le berceau (27) est constitué par une pièce (50-55) également en matériau isolant, prévue sur un au moins de deux bords surélevés (28-29) du berceau, la pièce (50-55) étant formée d'un élément en forme générale de diabolo comportant une gorge (51).

2 - Four à micro-ondes selon la revendication 1, caractérisé en ce que le matériau isolant est réalisé avec une céramique, en "Bakelite" (marque déposée), en polytetrafluoroethylène "Teflon" (marque déposée), en verre, notamment du genre "Pyrex" (marque déposée), ou en tout autre matériau isolant présentant de préférence une constante diélectrique, à la fréquence de 2,45 GHz, comprise entre 2 et 5.

3 - Four à micro-ondes selon l'une des revendications 1 ou 2, caractérisé en ce que le manchon (37) est ouvert du côté recevant l'extrémité de la broche (23) et est prolongé du côté opposé par un doigt (39) s'engageant dans l'embout creux (35) prévu en bout de l'axe du moteur (26).

4 - Four à micro-ondes selon la revendication 3, caractérisé en ce que la section interne du manchon (37) recevant la broche (23) et la section externe de cette broche présentent des profils complémentaires, de manière à assurer la transmission à la broche, par l'intermédiaire du manchon, de l'effet d'entraînement en rotation reçu du moteur par l'embout (35).

5 - Four à micro-ondes selon la revendication 4, caractérisé en ce que les sections interne du manchon (37) et externe de la broche (23) sont, selon le cas, rectangulaire, carrées ou présentent un profil quelconque non parfaitement circulaire.

6 - Four à micro-ondes selon la revendication 4, caractérisé en ce que la surface interne du manchon (37) comporte au moins une rainure axiale pour l'engagement d'une nervure en relief prévue dans l'extrémité de la broche (23).

7 - Four à micro-ondes selon l'une des revendications 1 ou 2, caractérisé en ce que le manchon recevant l'extrémité (34) de la broche (23) se présente sous la forme d'un revêtement (48) en matériau isolant, constituant une bague sertie ou frettée sur la broche et qui s'engage directement dans l'embout (35) du moteur (26).

8 - Four à micro-ondes selon l'une quelconque des revendications 1 à 7, caractérisé en ce que l'extrémité de la broche (23) pénétrant dans l'embout (35) du moteur d'entraînement (26) traverse un piège quart d'onde, circulaire, disposé coaxialement autour de la broche, ce piège étant constitué de deux pièces métalliques de révolution (41-42) présentant un profil en L, imbriquées l'une dans l'autre et inversées, ces pièces étant réunies de manière à serrer entre elles la paroi (11) de l'enceinte (8) au droit d'un passage dans l'enceinte du four, traversé par la broche.

9 - Four à micro-ondes selon l'une quelconque des revendications 1 à 8, caractérisé en ce que la pièce d'appui (50) est solidaire de la broche et repose sur un des rebords surélevés (29) du berceau (27) qui présente un profil en V (52) pour réaliser le centrage de la broche sur le berceau, longitudinalement et transversalement, sans empêcher sa libre rotation.

10 - Four à micro-ondes selon l'une quelconque des revendication 1 à 9, caractérisé en ce que la broche comporte deux éléments isolants (50-53) en forme de diabolos, propres à reposer sur les deux rebords (28-29) opposés du berceau, disposés parallèlement l'un à l'autre.

11 - Four à micro-ondes selon l'une quelconque des revendications 1 à 8, caractérisé en ce que l'un au moins des rebords surélevés (28-29) du berceau porte une pièce en matériau isolant (55), notamment en forme de diabolo, et sur laquelle s'appuie directement la broche.

12 - Four à micro-ondes selon la revendication 11, caractérisé en ce que la broche (23), comporte une rainure en creux (56) pour la positionner sur le berceau, au droit de la ou des pièces isolantes.

13 - Four à micro-ondes selon l'une quelconque des revendication 1 à 12, caractérisé en ce que la broche comporte deux fourchettes (30-31), propres à immobiliser sur celle-ci une pièce de viande ou autre aliment à rôtir (32), traversé par la broche, ces fourchettes munies de deux dents parallèles (54) étant de préférence respectivement disposées dans deux plans perpendiculaires, pour éviter des arcs parasites entre leurs pointes.

14 - Four à micro-ondes selon la revendication 13, caractérisé en ce que chaque fourchette (30-31) est enfilée et immobilisée sur la broche (23) en position appropriée et présente à cet effet un trou de même profil que la section de la broche mais décalé de 90° d'une fourchette à l'autre.

15 - Four à micro-ondes selon la revendication 13, caractérisé en ce que la broche comporte une partie vrillée sur elle-même à 90° pour disposer les fourchettes (30-31) dans deux plans perpendiculaires.

**Patentansprüche**

1. Mikrowellenherd mit einem Drehspieß und einem Grill-Heizwiderstand, mit einem Herdraum, wo ein Gericht für seine Zubereitung der Wirkung einer Hochfrequenz-Strahlung und gleichzeitig einer Infrarot-Strahlung von dem von der Innenwand des Herdraumes getragenen Grill-Heizwiderstand ausgesetzt werden kann, wobei der Drehspieß einerseits aus einem länglichen Spieß aus Metall besteht, von dem ein vorzugsweise spitzes Ende mit einer hohlen Antriebsmuffe zusammenwirkt, die fest mit der Welle eines elektrischen Motors verbunden ist, der den Spieß dreht und außerhalb einer die Rückseite des Herdraumes abschließenden Wand angeordnet ist, wobei sich der Spieß in einer zu dieser Wand senkrechten Ebene erstreckt, und andererseits aus einem Träger beteht, der den Spieß durch mindestens ein Auflageelement an der der Muffe entgegengesetzten Seite hält, wobei der Träger in den Herdraum eingesetzt ist und die Berührungsflächen zwischen dem Spieß und der Muffe der Motorwelle beziehungsweise dem Träger gegeneinander durch eine genügend dicke Schicht eines Isoliermaterials mit geringer Dielektrizitätskonstante isoliert sind, dadurch gekennzeichnet, daß das Ende (34) des Spießes (23) von der Antriebsmuffe (35) mittels einer Muffe (37, 48) aus Isoliermaterial gehalten ist und daß das Auflagelement des Spießes auf dem Träger (27) aus einem Teil (50, 55) ebenfalls aus Isoliermaterial besteht, der an mindestens einer von zwei Oberkanten (28, 29) des Trägers vorgesehen ist, wobei der Teil (50, 55) von einem Element in der allgemeinen Form eines Diabolos mit einer Rinne (51) gebildet ist.

2. Mikrowellenherd nach Anspruch 1, dadurch gekennzeichnet, daß das Isoliermaterial mit einem Keramikmaterial, aus "Bakelit" (eingetragenes Warenzeichen), aus Polytetrafluorethylen "Teflon" (eingetragenes Warenzeichen), aus Glas, besonders von der Art "Pyrex" (eingetragenes Warenzeichen) oder aus jedem anderen Isoliermaterial hergestellt ist, das vorzugsweise eine Dielektrizitätskonstante zwischen 2 und 5 bei der Frequenz 2,45 GHz aufweist.

3. Mikrowellenherd nach einem der Ansprüche 1 oder 2, dadurch gekennzeichnet, daß die Muffe (37) auf der das Ende des Spießes (23) aufnehmenden Seite offen und auf der entgegengesetzten Seite durch einen Zapfen (39) verlängert ist, der in die am Ende der Antriebswelle (26) vorgesehene hohle Antriebsmuffe (35) eingreift.

4. Mikrowellenherd nach Anspruch 3, dadurch gekennzeichnet, daß der Innenquerschnitt der den Spieß (23) aufnehmenden Muffe (37) und der äußere Querschnitt dieses Spießes komplementäre Profile aufweisen, um die vom Motor durch die Antriebsmuffe (35) ausgeübte Drehwirkung mittels der Muffe auf den Spieß zu übertragen.

5. Mikrowellenherd nach Anspruch 4, dadurch gekennzeichnet, daß der Innenquerschnitt der Muffe (37) und der Außenquerschnitt des Spießes (23) je nach dem Fall rechteckig, quadratisch oder mit einem beliebigen nicht vollkommen kreisförmigen Profil ausgebildet sind.

6. Mikrowellenherd nach Anspruch 4, dadurch gekennzeichnet, daß die Innenfläche der Muffe (37) mindestens eine axiale Nut für den Eingriff einer am Ende des Spießes (23) vorgesehenen vorstehenden Rippe aufweist.

7. Mikrowellenherd nach einem der Ansprüche 1 oder 2, dadurch gekennzeichnet, daß die das Ende (34) des Spießes (23) aufnehmende Muffe die Form einer aus Isoliermaterial bestehenden Beschichtung (48) aufweist, welche einen auf den Spieß aufgepreßten oder aufgeschrumpften Ring bildet und direkt in die Antriebsmuffe (35) des Motors (26) eingreift.

8. Mikrowellenherd nach einem der Ansprüche 1 bis 7, dadurch gekennzeichnet, daß das in die Antriebsmuffe (35) des Antriebsmotors (26) eindringende Ende des Spießes (23) eine koaxial um den Spieß angeordnete kreisförmige Viertelwellenfalle durchsetzt, die aus zwei Rotationsteilen (41, 42) aus Metall mit einem L-Profil besteht, die umgekehrt ineinander eingesetzt und so verbunden sind, daß sie zwischen sich die Wand (11) des Herdraumes (8) gegenüber einem Durchlaß im Herdraum einspannen, durch den der Spieß hindurchreicht.

9. Mikrowellenherd nach einem der Ansprüche 1 bis 8, dadurch gekennzeichnet, daß der Auflageteil (50) fest mit dem Spieß verbunden ist und auf einer der Oberkanten (29) des Trägers (27) ruht, die ein V-Profil (52) aufweist, um die Zentrierung des Spießes auf dem Träger in Längs- und Querrichtung ohne Behinderung seiner freien Drehung zu bewirken.

10. Mikrowellenherd nach einem der Ansprüche 1 bis 9, dadurch gekennzeichnet, daß der Spieß zwei Isolierelemente (50, 53) in Form von Diabolos aufweist, welche auf den zwei entgegengesetzten parallel zueinander angeordneten Kanten (28, 29) des Trägers ruhen können.

11. Mikrowellenherd nach einem der Ansprüche 1 bis 8, dadurch gekennzeichnet, daß mindestens eine der Oberkanten (28, 29) des Trägers einen Teil aus Isoliermaterial (55), insbesondere in Form eines Diabolos aufweist, auf dem der Spieß unmittelbar aufliegt.

12. Mikrowellenherd nach Anspruch 11, dadurch gekennzeichnet, daß der Spieß (23) eine Hohlrinne (56) aufweist, um ihn auf dem Träger in die richtige Lage gegenüber dem Isolierteil oder den Isolierteilen zu bringen.

13. Mikrowellenherd nach einem der Ansprüche 1 bis 12, dadurch gekennzeichnet, daß der Spieß zwei Gabeln (30, 31) aufweist, welche dazu dienen, auf ihm ein zu grillendes Stück Fleisch oder anderes Lebensmittel festzuhalten, durch welches der Spieß geführt ist, wobei diese Gabeln mit zwei parallelen Zinken (54) versehen sind, die vorzugsweise in zwei zueinander senkrechten Ebenen angeordnet sind, um Störlichtbögen zwischen ihren Spitzen zu vermeiden.

14. Mikrowellenherd nach Anspruch 13, dadurch gekennzeichnet, daß jede Gabel (30, 31) auf den Spieß (23) aufgeschoben und in der geeigneten Stellung festgestellt ist und zu diesem Zweck ein Loch vom gleichen Profil wie der querschnitt des Spießes, jedoch von einer zur anderen Gabel um 90° versetzt aufweist.

15. Mikrowellenherd nach Anspruch 13, dadurch gekennzeichnet, daß der Spieß einen in sich um 90° verdrillten Abschnitt aufweist, um die Gabeln (30, 31) in zwei zueinander senkrechten Ebenen anzuordnen.

## Claims

1. Micro-wave oven comprising a turn-spit and a grill resistor, equipped with an enclosure where an element to be cooked can be subjected to the effect of a high-frequency radiation and at the same time to an intra-red radiation emitted by the grill resistor carried by the internal wall of the enclosure, the turn-spit being constituted for the one part of an elongated metallic spit one end of which, preferably of pointed form, co-operates with a hollow drive end piece fast with the shaft of an electric motor controlling the rotation of this spit, situated on the exterior of a base wall closing the enclosure, the spit extending in a plane perpendicular to this wall, and for the other part by a cradle for supporting the spit by at least one support element opposite to the end piece, the cradle being lodged in the enclosure of the oven, the surfaces of contact between the spit and the motor shaft end piece and the support cradle respectively being electrically mutually insulated by an appropriate thickness of an insulating material of slight dielectric constant, characterised in that the extremity (34) of the spit (23) is supported by the end piece (35) through the intermediary of a sleeve (37 - 48) of insulating material, and in that the support element for the spit on the cradle (27) is constitutred by a piece (50-55) likewise of insulating material, provided on at least one of two raised edges (28 - 29) of the cradle, the piece (50 - 55) being formed by an element of generally diabolo form comprising a groove (51).

2. Micro-wave oven according to Claim 1, characterised in that the insulating material is realised with a ceramic, of "Bakelite" (Registered Trade Mark), of polytetrafluoroethylene "Teflon" (Registered Trade Mark), of glass, especially of "Pyrex" type (Registered Trade Mark, or of any other insulating material preferably having a dielectric constant, at the frequency of 2.45 GHz, between 2 and 5.

3. Micro-wave oven according to one of Claims 1 or 2, characterised in that the sleeve (37) is open on the side receiving the end of the spit (23) and is prolonged on the opposite side by a dog (39) engaging in the hollow end piece (35) provided on the end of the shaft of the motor (26).

4. Micro-wave oven according to Claim 3, characterised in that the internal section of the sleeve (37) receiving the spit (23) and the external section of this spit possess matching profiles in such manner as to ensure the transmission to the spit, through the sleeve, of the rotational drive effect received from the motor by the end piece (35).

5. Micro-wave oven according to Claim 4, characterised in that the internal section of the sleeve (37) and the external section of the spit (23) are, according to cases, rectangular, or square or possess any profile which is not perfectly circular.

6. Micro-wave oven according to Claim 4, characterised in that the internal surface of the sleeve (37) comprises at least one axial groove for the engagement of a relief rib provided in the extremity of the spit (23).

7. Micro-wave oven according to one of Claims 1 or 2, characterised in that the sleeve receiving the extremity (34) of the spit (23) is presented in the form of a lining (48) of insulating material, constituting a ring set or bound on the spit and engaging directly in the end piece (35) of the motor (26).

8. Micro-wave oven according to any one of Claims 1 to 7, characterised in that the extremity of the spit (23) which penetrates into the end piece (35) of the drive motor (26) traverses a circular quarter-wave trap, disposed coaxially around the spit, this trap being constituted by two metallic pieces (41 - 42) of revolution form, possessing an L form, fitting one into the other and inverted, these pieces being united in such manner as to grip the wall (11) of the enclosure (8) between them in line with a passage in the enclosure of the oven, through which the spit passes.

9. Micro-wave oven according to any one of Claims 1 to 8, characterised in that the support piece (50) is fast with the spit and rests on one of the elevated flanges (29) of the cradle (27), which has a V-profile (52) for realising the centring of the spit on the cradle, longitudinally and transversely, without preventing its free rotation.

10. Micro-wave oven according to any one of Claims 1 to 9, characterised in that the spit comprises two isolating elements (50-53) in the form of diabolos, adapted to rest on the two opposite flanges (28-29) of the cradle, disposed parallel to one another.

11. Micro-wave oven according to any one of Claims 1 to 8, characterised in that at least one of the raised flanges (28-29) of the cradle carries a piece of insulating material (55), especially in the form of a diabolo, on which the spit is directly supported.

12. Micro-wave oven according to Claim 11, characterised in that the spit (23) comprises a hollow groove (56) for its positioning on the cradle, in line with the insulating piece or pieces.

13. Micro-wave oven according to any one of Claims 1 to 12, characterised in that the spit comprises two forks (30-31) adapted to made a piece of meat or other foodstuff (32) for roasting, pierced by the spit, fast on the spit, these forks equipped with two parallel teeth (54) being preferably disposed respectively in two perpendicular planes, in order to avoid stray arcs between their points.

14. Micro-wave oven according to Claim 13, characterised in that each fork (30-31) is pushed and made fast on the spit (23) in an appropriate position and for this purpose possesses a hole of the same profile as the section of the spit, but staggered by 90° from one fork to the other.

15. Micro-wave oven according to Claim 13, characterised in that the spit comprises a part twisted on itself at 90° in order to dispose the forks (30-31) in two perpendicular planes.

Fig.2

Fig.1

Fig.3

Fig.4

Fig.5

Fig.6

Fig.7

EP 0 332 505 B1